# EUROPEAN PATENT APPLICATION

(11) **EP 4 142 360 A1**
(43) Date of publication of application: **01.03.2023**
(21) Application number: 21804197.8
(22) Date of filing: 29.03.2021
(51) Int. Cl.: H04W 28/22, H04W 72/04, H04W 76/19

(54) **RADIO CONNECTION RECONSTRUCTION METHOD AND APPARATUS, TERMINAL, AND STORAGE MEDIUM**

(30) Priority: 12.05.2020 CN 202010398575
(71) Applicant: GUANGDONG OPPO MOBILE TELECOMMUNICATIONS CORP., LTD., Dongguan, Guangdong 523860 (CN)
(72) Inventor: LIU, Jun, Dongguan, Guangdong 523860 (CN)
(74) Representative: Taor, Simon Edward William
(86) International application number: PCT/CN2021/083675
(87) International publication number: WO 2021/227683

(57) **Abstract**

Embodiments of the present disclosure disclose a wireless connection reestablishment method. The method includes: transmitting, in response to uplink data, a scheduling request to a network device; determining a transmission rate for transmitting the uplink data on a scheduled uplink resource; and triggering, in response to the transmission rate satisfying a trigger condition, a Radio Resource Control (RRC) connection reestablishment process. The embodiments of the present disclosure also provide a wireless connection reestablishment apparatus, a terminal, and a storage medium.

## Description

### CROSS-REFERENCE TO RELATED APPLICATIONS

This application is based on and claims priority to Chinese Patent Application No. 202010398575.9 filed on May 12, 2020, the entire disclosure of which is incorporated herein by reference.

### FIELD

The present disclosure relates to the field of wireless communication connections, and more particularly, relates to but is not limited to, a wireless connection reestablishment method and apparatus, a terminal, and a storage medium.

### BACKGROUND

In a wireless communication system, a terminal transmits uplink user data based on wireless resource scheduling of a network device, which means that before transmitting uplink data, a terminal device needs to obtain scheduling information transmitted by the network device, such as a time frequency resource allocation, a modulation coding method, etc. In addition, the network device also needs to inform the terminal device of power control instruction information related to an uplink transmission.

### SUMMARY

According to embodiments of the present disclosure, a wireless connection reestablishment method and apparatus, a terminal, and a storage medium are provided.

Implementations of technical solutions of the present disclosure are provided below.

In a first aspect, an embodiment of the present disclosure provides a wireless connection reestablishment method. The method includes: transmitting, in response to uplink data, a scheduling request to a network device; determining a transmission rate for transmitting the uplink data on a scheduled uplink resource; and triggering, in response to the transmission rate satisfying a trigger condition, a Radio Resource Control (RRC) connection reestablishment process.

In a second aspect, an embodiment of the present disclosure provides a wireless connection reestablishment apparatus. The apparatus includes: a transmitting module configured to transmit, in response to uplink data, a scheduling request to a network device; a determining module configured to determine a transmission rate for transmitting the uplink data on a scheduled uplink resource; and a trigger module configured to trigger, in response to the transmission rate satisfying a trigger condition, an RRC connection reestablishment process.

In a third aspect, an embodiment of the present disclosure provides a terminal. The terminal includes: a processor; and a memory storing a computer program executable on the processor. The processor, when executing the computer program, implements the steps of the wireless connection reestablishment method described above.

In a fourth aspect, an embodiment of the present disclosure provides a computer-readable storage medium. The computer-readable storage medium stores a computer program. The computer program, when executed by a processor, implements the steps of the wireless connection reestablishment method described above.

The technical solutions provided by the embodiments of the present disclosure can at least provide the following advantageous effects.

According to the embodiments of the present disclosure, the scheduling request is transmitted to the network device in response to the uplink data. The transmission rate for transmitting the uplink data on the scheduled uplink resource is determined. The RRC connection reestablishment process is triggered in response to the transmission rate satisfying the trigger condition. In this way, when the terminal maintains a low uplink data transmission rate for a long time, RRC connection reestablishment can be triggered for a selection of a new serving cell. Therefore, a good transmission service for transmitting the uplink data can be provided, and user experience can be improved.

### BRIEF DESCRIPTION OF DRAWINGS

In order to clearly explain technical solutions of embodiments of the present disclosure, drawings used in description of the embodiments are briefly described below. Obviously, the drawings as described below are merely some embodiments of the present disclosure. Based on these drawings, other drawings can be obtained by those skilled in the art without any creative effort.
FIG. 1 is a schematic diagram showing an architecture of a communication system according to an embodiment of the present disclosure.
FIG. 2 is a schematic flowchart illustrating a transmission process for user data in the related art.
FIG. 3 is a schematic flowchart illustrating a wireless connection reestablishment method according to an embodiment of the present disclosure.
FIG. 4 is an interaction flowchart illustrating a wireless connection reestablishment method according to an embodiment of the present disclosure.
FIG. 5 is a logical flowchart illustrating triggering an RRC reestablishment process based on an uplink transmission rate according to an embodiment of the present disclosure.
FIG. 6 is a schematic flowchart illustrating a transmission process for user data according to an embodiment of the present disclosure.
FIG. 7 is a schematic diagram showing an RRC connection reestablishment process and an RRC reconfiguration process according to an embodiment of the present disclosure.
FIG. 8 is a schematic structural diagram showing a wireless connection reestablishment apparatus according to an embodiment of the present disclosure.
FIG. 9 is a schematic diagram showing a hardware entity for a terminal according to an embodiment of the present disclosure.

### DESCRIPTION OF EMBODIMENTS

In order to make the obj ects, technical solutions, and advantages of embodiments of the present disclosure more apparent, the technical solutions provided by the embodiments of the present disclosure will be described clearly and comprehensively below with reference to the accompanying drawings described in the embodiments of the present disclosure. Obviously, the embodiments described below are only part of, rather than all of, the embodiments of the present disclosure. The following embodiments are used to illustrate the present disclosure and are not intended to limit the scope of the present disclosure. Based on the embodiments of the present disclosure, all other embodiments obtained by a person skilled in the art without creative labor shall fall within the protection scope of the present disclosure.

Before a detailed description of a wireless connection reestablishment method according to an embodiment of the present disclosure, a brief introduction of a communication system and terms involved in the embodiments of the present disclosure is provided.

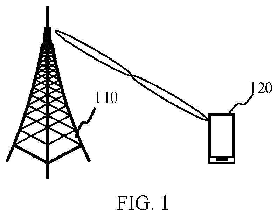

FIG. 1 is a schematic diagram showing an architecture of a communication system according to an embodiment of the present disclosure. Referring to FIG. 1, a network device 110 and a terminal 120 are exemplarily illustrated. In some embodiments, the communication system may include a plurality of network devices, and coverage of each network device may include a different number of terminal devices. The embodiments of the present disclosure are not limited to any of these examples.

The network device 110 in the communication system may provide communication coverage for a specific geographic region, and may communicate with the terminal 120 located in the coverage region. In some embodiments, the network device 110 may be Evolutional Node B (eNB or eNodeB) in a Long Term Evolution (LTE) system, or a wireless controller in a Cloud Radio Access Network (CRAN). Alternatively, the network device 110 can be a mobile switching center, a relay station, an access point, a vehicle-mounted device, a wearable device, a hub, a switch, a bridge, a router, a network device in a 5G network, or a network device in a future communication system, etc.

The communication system further includes at least one terminal 120 located within the coverage region of the network device 110. The term "terminal" used herein includes, but is not limited to, at least one of: a device configured to receive/transmit a communication signal via a wired line connection, such as a Public Switched Telephone Network (PSTN), a Digital Subscriber Line (DSL), a digital cable, a direct cable connection, via another data connection/network, and/or via a wireless interface , for example, for a cellular network, a Wireless Local Area Network (WLAN), a digital television network such as a Digital Video Broadcasting Handheld (DVB-H) network, a satellite network, and an Amplitude Modulation-Frequency Modulation (AM-FM) broadcast transmitter, and/or via another terminal; and an Internet of Things (IoT) device. A terminal configured to communicate through the wireless interface may be referred to as a "wireless communication terminal", a "wireless terminal", or a "mobile terminal". Examples of the mobile terminal include but are not limited to at least one of: a satellite or a cellular phone, a Personal Communication System (PCS) terminal that may combine a cellular radiotelephone with capabilities such as data processing, facsimile and data communication, a Personal Digital Assistant (PDA) that may include a radiotelephone, a pager, an Internet/intranet access, a Web browser, a notepad, a calendar, and/or a Global Positioning System (GPS) receiver, and a conventional laptop and/or palmtop receiver, or other electronic devices including a radiotelephone transceiver. The terminal can refer to an access terminal, a User Equipment (UE), a user unit, a user station, a mobile station, a mobile platform, a remote station, a remote terminal, a mobile device, a user terminal, a terminal, a wireless communication device, a user agent, or a user device. The access terminal can be a cellular phone, a cordless phone, a Session Initiation Protocol (SIP) phone, a Wireless Local Loop (WLL) station, a Personal Digital Assistant (PDA), a handheld device having a wireless communication function, a computing device or another processing device connected to a wireless modem, a vehicle-mounted device, a wearable device, a terminal in a 5G network, or a terminal in the future evolved Public Land Mobile Network (PLMN), etc. For convenience of description, devices mentioned above are collectively referred to as terminals.

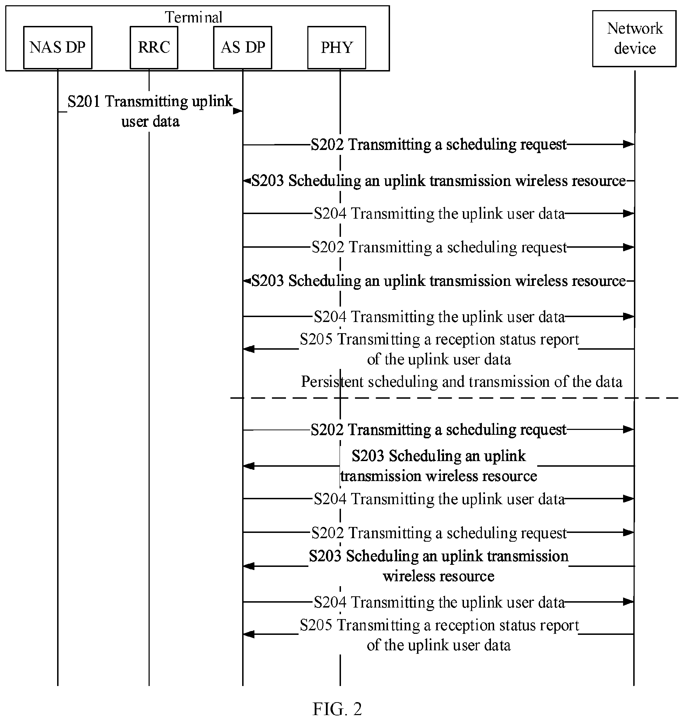

In the following, in order to facilitate understanding of the solutions of the embodiments of the present disclosure, a transmission process for user data in the related art will be analyzed and described. FIG. 2 is a schematic flowchart illustrating a transmission process for user data in the related art. As illustrated in FIG. 2, an implementation of an existing terminal protocol stack design includes actions at 201 to 205.

At S201, a Non-Access Stratum Data Plane (NAS DP) of a terminal transmits uplink user data to an Access Stratum Data Plane (AS DP).

At S202, the AS DP transmits a scheduling request to a network device.

At S203, the network device schedules an uplink transmission wireless resource to the AS DP.

At S204, the AS DP transmits the uplink user data to the network device.

At S205, the network device transmits a reception status report of the uplink user data to the AS DP.

The action at S205 is an optional action. The actions at S202 to S205 are executed cyclically, which represents a persistent scheduling and transmission of the data. It is indicated that the NAS DP transmits a large amount of uplink user data, and thus the scheduling request needs to be transmitted repeatedly to achieve a plurality of transmissions.

As can be seen from FIG. 2, uplink user data of the terminal is transmitted from the NAS DP to the AS DP. The AS DP caches the uplink user data and then transmits a scheduling request to the network device. The network device performs, based on a currently-available wireless resource, a joint scheduling on an uplink transmission wireless resource used for the terminal, and transmits the uplink transmission wireless resource to the terminal. The AS DP transmits the uplink user data to the network device after receiving the uplink transmission wireless resource. The AS DP may indicates in a header of a transmitted data packet that, the network device needs to transmit a reception status report of the uplink user data. The network device may transmit the reception status report of the uplink user data to the terminal based on an indication in the header of the received data packet.

As can be seen from the above description, the uplink user data of the terminal is transmitted based on a wireless resource scheduling of the network device. When the network device continuously schedules fewer wireless resources to the terminal for a long time due to reasons such as network congestion, the terminal may only transmit a little uplink user data. In this way, the terminal maintains a low uplink transmission data rate for a long time, which brings a great impact on user experience.

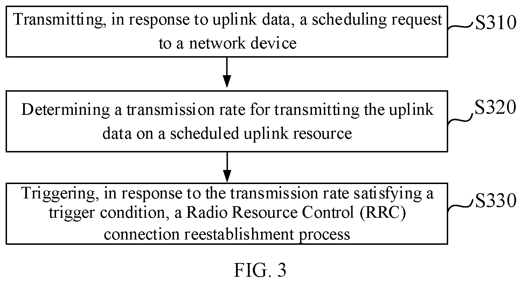

According to an embodiment of the present disclosure, a wireless connection reestablishment method is provided. The method is applied in the terminal. Functions achieved by the method can be realized by means of invoking program codes by a processor in the terminal. Of course, the program codes may be stored in a computer storage medium. Therefore, the terminal includes at least the processor and a storage medium. FIG. 3 is a schematic flowchart illustrating a wireless connection reestablishment method according to an embodiment of the present disclosure. As illustrated in FIG. 3, the method at least includes actions at blocks 310 to 330.

At block S310, a scheduling request is transmitted to a network device in response to uplink data.

Here, the scheduling request is configured to request, from the network device, an uplink resource for carrying the uplink data.

It should be noted that when needing to transmit data on an uplink shared channel, the terminal needs to transmit a scheduling request to the network device to apply for an uplink resource. For example, upon an arrival of uplink data, one scheduling request is triggered at a Medium Access Control (MAC) layer. The scheduling request includes an identifier such as a Cell-Radio Network Temporary Identifier (C-RNTI) of the terminal. The scheduling request remains pending until a system cancels the scheduling request. The system cancels the scheduling request in any of the following two cases: a case where an MAC Protocol Data Unit (PDU) combined at the MAC layer includes all the uplink data to be transmitted in a cache of the terminal; or a case where a resource indicated by an uplink grant received by the terminal may accommodate all data to be tested. A transmission cycle of the scheduling request and a position of the scheduling request in a subframe are determined by a configuration of an upper layer of a protocol stack.

At block S320, a transmission rate for transmitting the uplink data on a scheduled uplink resource is determined.

Here, the scheduled uplink resource is an uplink transmission resource granted by the network device to the terminal.

Here, transmitting the uplink data includes transmitting, by the terminal, signaling data and user data to the network device.

It should be noted that, in order to avoid a waste of resources, the terminal needs to indicates to the network device whether the terminal itself has the uplink data to be transmitted, in such a manner that the network device can decide whether to allocate an uplink resource to the terminal. When the uplink data arrives, the terminal applies for an uplink resource from the network device for transmitting the uplink data by means of transmitting a scheduling request to the network device.

Here, the transmission rate refers to an uplink data transmission rate, i.e., a data transmission rate at which the terminal transmits information to the network device, e.g., a data transmission rate at which a wireless terminal such as a cell phone or a laptop transmits user data to a base station. The transmission rate may be expressed as a number of bits of data and/or information in each uplink transmission unit. For example, the transmission rate may be expressed as a number of bits of data and/or information in each transmission symbol, or a number of bits of data/information in each uplink segment, or a number of frames of data/information in each uplink segment. The transmission rate is numerically equal to a number of bits per second that make up a data code, in megabits per second (Mbps).

At block S330, an RRC connection reestablishment process is triggered in response to the transmission rate satisfying a trigger condition.

Here, the trigger condition represents that the uplink data transmission rate is too low to obtain a good uplink data service. In some embodiments, the trigger condition may be that the transmission rate is below a specific transmission threshold within a set time interval, or that the transmission rate remains below the specific transmission threshold within a number of consecutive set time intervals, or that an amount of cached uplink data is above a specific cache threshold within a set time interval, etc. The set time interval is a pre-set specific time period that starts upon an arrival of the uplink data at the AS DP, and is generally set based on a transmission rate change of a transmission process of historical uplink data, e.g., within 3 seconds for the uplink user data to be transmitted from the NAS DP to the AS DP.

Here, the RRC connection reestablishment process is used to restore a signaling connection between a network and the UE, i.e., a Signal Radio Bearer 1 (SRB1).

It should be noted that a trigger reason for triggering the RRC reestablishment process in an RRC connected state may be a wireless link failure or a cell switching failure. Of course, the trigger reason may be one of an integrity check failure, an RRC connection reconfiguration failure, or a reconfiguration of a master cell group synchronization failure.

It should be noted that during the RRC connection reestablishment process, an ongoing transmission performed by the terminal needs to be suspended, which affects the user experience. According to the embodiment of the present disclosure, when a communication problem occurs between the terminal and the network device, i.e., when the uplink data transmission rate is determined to be too low, the terminal needs to initiate the RRC connection reestablishment process to select a new serving cell and obtain a better uplink transmission service.

In the embodiment of the present disclosure, the transmission rate for transmitting the uplink data on the scheduled uplink resource is determined. The RRC connection reestablishment process is triggered in response to the transmission rate satisfying the trigger condition. In this way, when the terminal maintains a low uplink data transmission rate for a long time, RRC connection reestablishment can be triggered for a selection of a new serving cell. Therefore, a good transmission service for transmitting the uplink data can be provided, and the user experience can be improved.

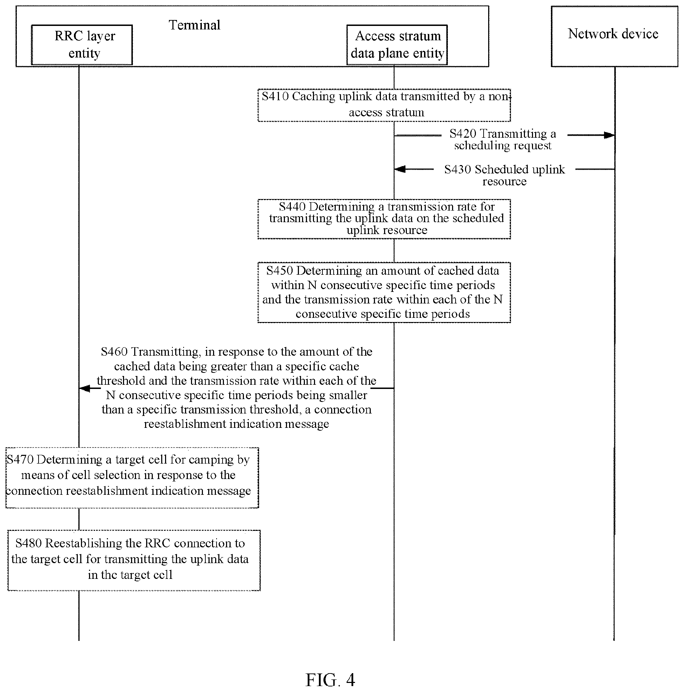

FIG. 4 is an interaction flowchart illustrating a wireless connection reestablishment method according to an embodiment of the present disclosure. As illustrated in FIG. 4, the method at least includes actions at block S410 to S480.

At block S410, an access stratum data plane entity caches uplink data transmitted by a non-access stratum data plane entity.

Here, the uplink data is uplink user data. The uplink user data of the terminal is transmitted from the non-access stratum data plane entity to the access stratum data plane entity. The access stratum data plane entity caches the uplink user data first.

At block S420, the access stratum data plane entity transmits a scheduling request to the network device.

Here, the scheduling request is configured to request, from the network device, a uplink resource for carrying the uplink data.

At block S430, the network device transmits a scheduled uplink resource to the access stratum data plane entity.

Here, the network device performs, based on a currently-available wireless resource, a joint scheduling on an uplink resource used for the terminal, i.e., a uplink transmission wireless resource, and then the network side transmits the uplink transmission wireless resource to the access stratum data plane entity of the terminal.

At block S440, the access stratum data plane entity determines a transmission rate for transmitting the uplink data on the scheduled uplink resource.

Here, the transmission rate for transmitting the uplink data may be expressed as a number of bits of data and/or information in each uplink transmission unit. For example, the transmission rate may be expressed as a number of bits of data and/or information in each transmission symbol, or a number of bits of data/information in each uplink segment, or a number of frames of data/information in each uplink segment. The transmission rate is numerically equal to a number of bits per second that make up a data code, e.g., an uplink rate ranging from 640Kbps to 1Mbps of Asymmetric Digital Subscriber Loop (ADSL).

It should be noted that, transmitting the user data at a user plane involves two layers, i.e., Layer 1 (L1): a physical layer and Layer 2 (L2): a data link layer. L2 further includes three sub-layers, i.e., a Packet Data Convergence Protocol (PDCP) layer, a Radio Link Control (RLC) layer, and an MAC layer.

In some embodiments, the transmission rate for transmitting the uplink data may be calculated in any of the following schemes.

Scheme 1: the access stratum data plane entity determines a number of data packets transmitted on the uplink resource within a specific time period and determines, based on the number of data packets and the specific time period, the transmission rate. Here, the specific time period begins at a time point at which the uplink data is received by the access stratum data plane entity.

Here, an amount of transmission data transmitted on the uplink resource is a number of data packets initially transmitted on the uplink resource. For example, the terminal transmits, to the network device, PDU packets numbered 0, 1, 2, 3, and 4 respectively on the uplink resource, and the network returns an Acknowledgement (ACK) message or transmits, to the terminal, a status report of the uplink user data to indicate successful reception of the 5 PDU packets. Therefore, the amount of the transmission data transmitted on the uplink resource in such a process is 5 PDU packets.

It should be noted that a preset timer is started upon reception of the uplink data by the access stratum data plane entity. The specific time period may be a running time length of the preset timer. After the preset timer times out, the transmission rate may be obtained by calculating a number of transmission data packets for each layer (PDCP\RLC\MAC) per unit time.

Scheme 2: the access stratum data plane entity determines, based on a resource indication returned by the network device, the uplink resource scheduled within a specific time period and determines the transmission rate based on the uplink resource scheduled within the specific time period.

Here, the preset timer is started upon reception of the uplink data by the access stratum data plane entity. The specific time period may be a running time length of the preset timer.

In an implementation, after the preset timer times out, a received physical layer resource may be determined based on a network resource indication issued by the network within the running time length, e.g., two symbols in a time domain, or a plurality of consecutive resource blocks in a frequency domain. Therefore, a total amount of data carried by these timefrequency resources within the specific time period is determined. Further, an amount of user data transmitted per unit time is calculated.

At block S450, the access stratum data plane entity determines an amount of cached data within N consecutive specific time periods and the transmission rate within each of the N consecutive specific time periods.

Here, N is a positive integer greater than or equal to 2. The N consecutive specific time periods are a preset duration that starts upon the arrival of the uplink data at the AS DP, and is generally set based on the transmission rate change in the transmission process of the historical uplink data.

At block S460, the access stratum data plane entity transmits, in response to the amount of the cached data being greater than a specific cache threshold and the transmission rate within each of the N consecutive specific time periods being smaller than a specific transmission threshold, a connection reestablishment indication message to an RRC entity.

Here, when the transmission rate remains below a predetermined value within each of the N consecutive specific time periods and the amount of data cached by the access stratum data plane entity is greater than a predetermined amount, the access stratum data plane entity transmits the connection reestablishment indication message to the RRC entity. The connection reestablishment indication message is used for triggering the RRC connection reestablishment process.

At block S470, the RRC entity determines a target cell for camping by means of cell selection in response to the connection reestablishment indication message.

Here, when an RRC connection needs to be reestablished, the terminal RRC entity selects a target cell for camping among at least one searched first candidate cell. The target cell is a new serving cell belonging to a different network device coverage from a current serving cell, i.e., an inter-frequency cell having a good signal quality, or a new serving cell belonging to a different network device coverage from the current serving cell, i.e., an intra-frequency cell having a good signal quality.

In some embodiments, a process of determining the target cell may be implemented through actions of: initiating, by the RRC entity in response to the connection reestablishment indication message, the cell selection to obtain at least one candidate cell; determining, by the RRC entity based on a frequency at which each of the at least one candidate cell operates, a priority corresponding to the candidate cell; and selecting, by the RRC entity based on the priority, the target cell from the at least one candidate cell for camping.

Here, the at least one candidate cell is an intra-frequency cell or an inter-frequency cell other than a current serving cell. When a channel quality of a cell in the at least one candidate cell satisfies a cell selection criterion, i.e., S criterion, the cell may be selected as the target cell for camping. The terminal device is able to perform reestablishment after camping on the target cell.

It should be noted that when an inter-frequency cell having a good signal quality may be searched out, the terminal may preferentially camp on the inter-frequency cell. When no suitable inter-frequency cell is available but an intra-frequency cell having a good signal quality is available, the terminal may choose to camp on the intra-frequency cell. When neither a suitable inter-frequency cell nor a suitable intra-frequency cell is available, the terminal may continue camping on the current serving cell. That is, when selecting the target cell for camping, the terminal prioritizes the inter-frequency cell over the intra-frequency cell to ensure a service quality so as to ensure a transmission effect of the uplink user data.

It should be noted that the cell selection refers to a process that the terminal has not yet camped on a cell and needs to select a suitable cell for camping. For example, after being turned on or re-entering a network coverage region, the terminal discovers all frequencies allowed by the PLMN and selects a suitable cell for camping. According to the embodiment of the present disclosure, when the uplink transmission data rate remains low, an indication message is transmitted by the access stratum data plane entity to the non-access stratum data plane entity to trigger the process of cell selection. Therefore, a connection to a cell having a good data transmission service can be established as soon as possible to improve the user experience.

At block S480, the RRC entity reestablishes an RRC connection to the target cell for transmitting the uplink data in the target cell.

Here, when the terminal camps on the new serving cell, i.e., the target cell, terminal RRC entity performs the RRC connection reestablishment process to reestablish RRC signaling with the target cell and further, may transmit the uplink user data in the target cell after completing an RRC connection reconfiguration process.

It should be noted that, an RRC connection reestablishment request message is transmitted to the target cell only when the terminal camps on the target cell. A target network device corresponding to the target cell replies an RRC connection reestablishment message to the terminal RRC. The terminal RRC entity performs the RRC connection reestablishment process and transmits an RRC connection reestablishment completion message to the target network device. After receiving the RRC connection reestablishment completion message, the target network device transmits an RRC connection reconfiguration message to the terminal RRC. The terminal RRC entity performs an RRC connection reconfiguration process and transmits an RRC connection reconfiguration completion message to the target network device. Therefore, the terminal reestablishes the RRC connection on the target cell and may transmit the uplink user data on the target cell.

In the embodiment of the present disclosure, the access stratum data plane entity caches uplink data transmitted by the non-access stratum data plane entity and transmits a scheduling request to the network device. Then, the network device schedules an uplink resource to the access stratum data plane entity. After that, the access stratum data plane entity determines a transmission rate for transmitting the uplink data on the scheduled uplink resource. When it is determined that the transmission rate satisfies a trigger condition, the access stratum data plane entity transmits a connection reestablishment indication message to the non-access stratum data plane entity to trigger the RRC connection reestablishment. Therefore, a new serving cell may be selected and RRC connection signaling may be established to obtain a transmission service for the target cell.

The above wireless connection reestablishment method will be described below in combination with an example. However, it should be noted that the example is used only for better illustration of the present disclosure, and does not constitute any improper limitation to the present disclosure.

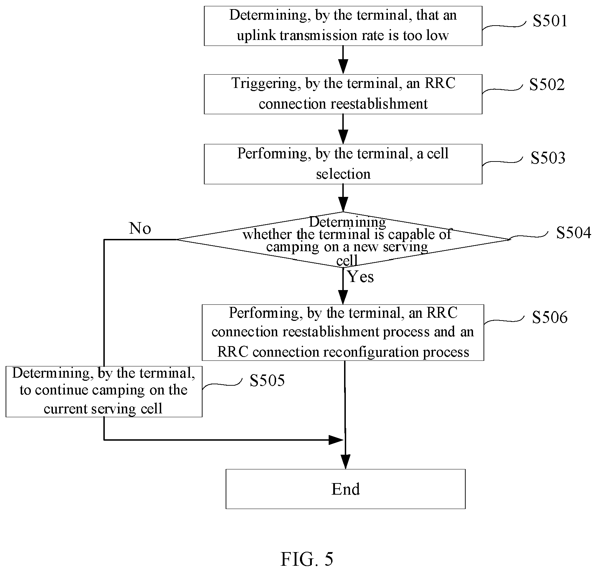

As illustrated in FIG. 5, according to an embodiment of the present disclosure, the terminal obtains a good transmission service for the uplink user data of a new serving cell through the RRC reestablishment process which at least includes the following actions at blocks S501 to S506.

At block S501, the terminal determines that an uplink transmission rate is too low.

At block S502, the terminal triggers an RRC connection reestablishment.

Here, after the RRC receives an indication that the transmission rate of the uplink user data is too low, the terminal may trigger the RRC connection reestablishment.

At block S503, the terminal performs a cell selection.

Here, the RRC initiates the cell selection, and the current serving cell is excluded from a cell search list. It should be noted that when an inter-frequency cell having a good signal quality can be searched out, the terminal may preferably camp on the inter-frequency cell. When no suitable inter-frequency cell is available but an intra-frequency cell having a good signal quality is available, the terminal may choose to camp on the intra-frequency cell.

At block S504, the terminal determines whether it is capable of camping on a new serving cell.

Here, when the channel quality of a cell in the cell search list satisfies the S criterion, the cell may be selected as the target cell for camping. The terminal device is capable of performing reestablishment after camping on the target cell.

When the terminal is unable to camp on the new serving cell, the action at block S505 is executed; otherwise, the action at block S506 is executed.

At block S505, the terminal continues camping on the current serving cell.

Here, when neither a suitable inter-frequency cell nor a suitable intra-frequency cell is available, the terminal may continue camping on the current serving cell.

At block S506, the terminal performs an RRC connection reestablishment process and an RRC connection reconfiguration process.

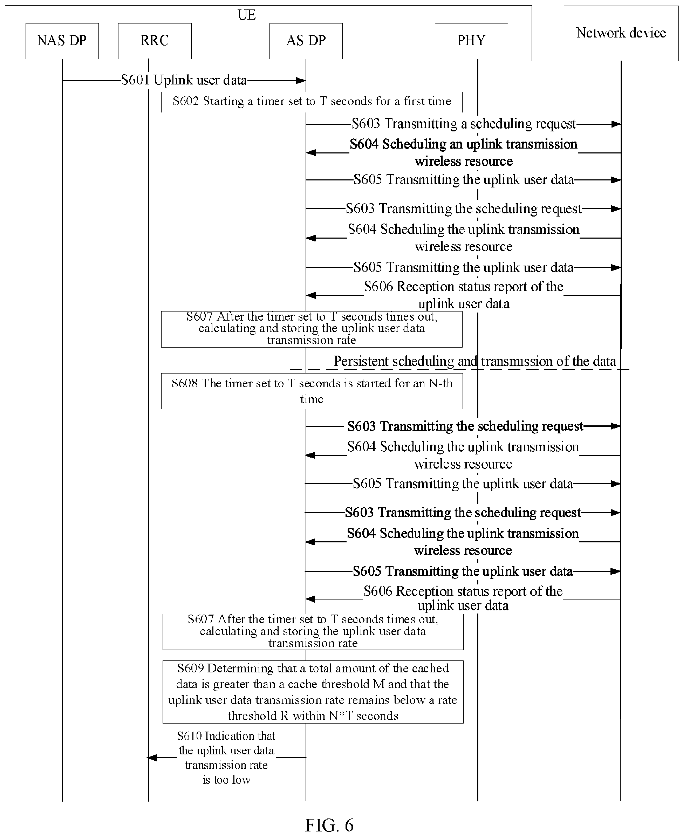

In some embodiments, reference to a process of the action of determining the uplink transmission rate at block S501 may be made to FIG. 6. The uplink user data of the terminal is transmitted from the NAS DP to the AS DP. The AS DP caches uplink user data first, then starts a timer set to T seconds, and then transmits a scheduling request to the network device. The network device performs, based on a currently-available wireless resource, the joint scheduling on an uplink transmission wireless resource used for the terminal, and transmits the uplink transmission wireless resource to the AS DP. The AS DP transmits the uplink user data to the network device after receiving the uplink transmission wireless resource. The AS DP may indicate in the header of the transmitted data packet that, the network device needs to transmit a reception status report of the uplink user data. The network device may transmit the reception status report of the uplink user data to the terminal based on the indication in the header of the received data packet.

As illustrated in FIG. 6, a solution provided by an embodiment of the present disclosure includes actions at block S601 to S610.

At block S601, the NAS DP of the terminal transmits uplink user data to the AS DP.

At block S602, the AS DP starts a timer set to T seconds for a first time.

At block S603, the AS DP transmits a scheduling request to the network device.

At block S604, the network device schedules an uplink transmission wireless resource to the AS DP.

At block S605, the AS DP transmits the uplink user data to the network device.

At block S606, the network device transmits a reception status report of the uplink user data to the AS DP.

The action at block S606 is an optional action. In response to a persistent scheduling and transmission of the data, the actions at blocks S603 to S606 are executed cyclically, which indicates that the NAS DP transmits a large amount of uplink user data, and thus the scheduling request needs to be transmitted repeatedly to achieve a plurality of transmissions.

At block S607, after the timer set to T seconds times out, the AS DP calculates and stores an uplink user data transmission rate.

After the timer set to T seconds times out, the AS DP may calculate an uplink user data transmission rate within T seconds and stores the uplink user data transmission rate in an uplink transmission rate array.

At block S608, the timer set to T seconds is started for an N-th time.

In a case that the timer set to T seconds times out for an (N-1)-th time and in response to the persistent scheduling and transmission of the uplink data, the timer set to T seconds is started for the N-th time. The above actions at blocks S603 to S606 are cyclically executed within a N-th T seconds. After the timer set to T seconds times out for the N-th time, the action at block S607 is continued to be executed.

At block S609, the AS DP determines that a total amount of the cached data is greater than a cache threshold M and that the uplink user data transmission rate remains below a rate threshold R within N^{∗}T seconds.

After the timer set to T seconds times out for the N-th time, it is determined whether the total amount of the data cached by the AS DP within N^{∗}T seconds is greater than M and whether the uplink user data transmission rate remains below R within N^{∗}T seconds. Here, M and R are both greater than 0. An actual value of each of M and R may be set based on an actual test.

At block S610, the AS DP transmits an indication that the uplink user data transmission rate is too low to the RRC.

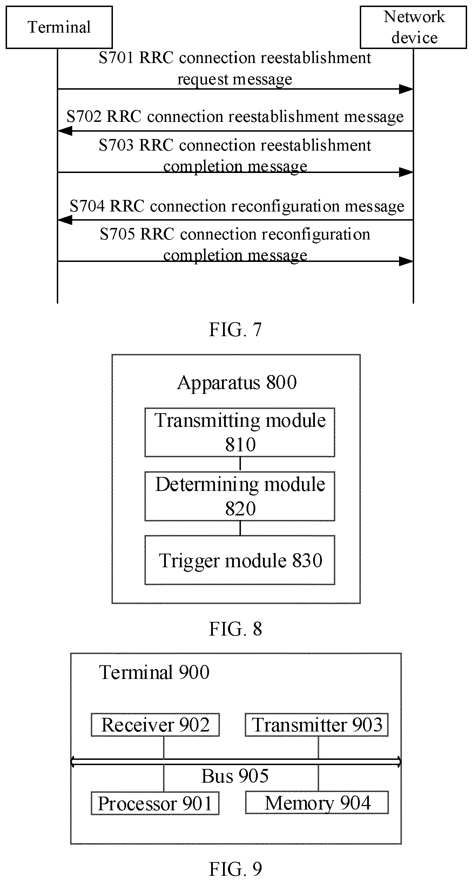

In some embodiments, reference to the RRC connection reestablishment process and the RRC reconfiguration process in the above action at block S506 may be made to FIG. 7. The RRC connection reestablishment process includes actions at block S701 to S705.

At block S701, the terminal transmits an RRC connection reestablishment request message to the network device.

At block S702, the network device transmits an RRC connection reestablishment message to the terminal.

At block S703, the terminal transmits an RRC connection reestablishment completion message to the network device.

After receiving the RRC connection reestablishment completion message, the network device enters the RRC connection reconfiguration process, As illustrated in FIG. 7, the RRC connection reconfiguration process includes actions at block S704 and S705.

At block S704, the network device transmits an RRC connection reconfiguration message to the terminal, and the terminal performs the RRC connection reconfiguration process.

At block S705, the terminal transmits an RRC connection reconfiguration completion message to the network device.

Finally, after the terminal performs the RRC connection reestablishment process and the RRC connection reconfiguration process, the RRC connection is reestablished on the new serving cell, allowing the uplink user data to be transmitted on the new serving cell.

In the embodiments of the present disclosure, when the UE maintains the low uplink transmission rate for a long time, the RRC connection reestablishment process is triggered to obtain the good transmission service for the uplink user data by means of reestablishing the RRC connection on the new serving cell, thereby improving the user experience. Also, since the terminal having the low uplink transmission rate is connected to the new serving cell through the RRC reestablishment process, a congestion status of the current serving cell can be partially mitigated.

Based on the above embodiments, according to an embodiment of the present disclosure, a wireless connection reestablishment apparatus is further provided. The apparatus includes modules and units included in each of the modules. Each of the modules and each of the units may be implemented by a processor in the terminal or by a logic circuit. In an implementation, the processor may be a Central Processing Unit (CPU), a Micro Processing Unit (MPU), a Digital Signal Processor (DSP), or a Field Programmable Gate Array (FPGA), etc.

FIG. 8 is a schematic structural diagram showing a wireless connection reestablishment apparatus according to an embodiment of the present disclosure. As illustrated in FIG. 8, the apparatus 800 includes a transmitting module 810, a determining module 820, and a trigger module 830, The transmitting module 810 is configured to transmit, in response to uplink data, a scheduling request to a network device. The determining module 820 is configured to determine a transmission rate for transmitting the uplink data on a scheduled uplink resource. The trigger module 830 is configured to trigger, in response to the transmission rate satisfying a trigger condition, an RRC connection reestablishment process.

In some embodiments, the apparatus 800 further includes a cache module. The cache module is configured to cache, by means of an access stratum data plane entity, the uplink data transmitted by a non-access stratum data plane entity. The transmitting module 810 is further configured to transmit, by means of the access stratum data plane entity, the scheduling request to the network device. The scheduling request is configured to request, from the network device, an uplink resource for carrying the uplink data. Correspondingly, the determining module 820 is further configured to determine, by means of the access stratum data plane entity, the transmission rate for transmitting the uplink data on the scheduled uplink resource. The trigger module 830 is further configured to trigger, by means of the access stratum data plane entity in response to the transmission rate satisfying the trigger condition, the RRC connection reestablishment process.

In some embodiments, the determining module 820 includes a first determining submodule and a second determining submodule. The first determining submodule is configured to determine, by means of the access stratum data plane entity, a number of data packets transmitted on the uplink resource within a specific time period. The specific time period begins at a time point at which the uplink data is received by the access stratum data plane entity. The second determining submodule is configured to determine, by means of the access stratum data plane entity based on the number of data packets and the specific time period, the transmission rate.

In some embodiments, the determining module 820 includes a third determining submodule and a fourth determining submodule. The third determining submodule is configured to determine, by means of the access stratum data plane entity based on a resource indication returned by the network device, the uplink resource scheduled within a specific time period. The specific time period begins at a time point at which the uplink data is received by the access stratum data plane entity. The fourth determining submodule is configured to determine, by means of the access stratum data plane entity based on the uplink resource scheduled within the specific time period, the transmission rate.

In some embodiments, the trigger module 830 includes a fifth determining submodule and a trigger submodule. The fifth determining submodule is configured to determine, by means of the access stratum data plane entity, an amount of cached data within N consecutive specific time periods and the transmission rate within each of the N consecutive specific time periods. N is a positive integer greater than or equal to 2. The trigger submodule is configured to transmit, by means of the access stratum data plane entity in response to the amount of the cached data being greater than a specific cache threshold and the transmission rate within each of the N consecutive specific time periods being smaller than a specific transmission threshold, a connection reestablishment indication message to an RRC entity. The connection reestablishment indication message is used for triggering the RRC connection reestablishment process.

In some embodiments, the apparatus further includes a cell selection module. The cell selection module is configured to determine, by means of the RRC entity, a target cell for camping by means of cell selection in response to the connection reestablishment indication message.

In some embodiments, the cell selection module includes a cell selection submodule, a sixth determining submodule, and a camping submodule. The cell selection submodule is configured to initiate, by means of the RRC entity in response to the connection reestablishment indication message, the cell selection to obtain at least one candidate cell. The at least one candidate cell is an intra-frequency cell or an inter-frequency cell other than a current serving cell. The sixth determining submodule is configured to determine, by means of the RRC entity based on a frequency at which each of the at least one candidate cell operates, a priority corresponding to the candidate cell. The camping submodule is configured to select, by means of the RRC entity based on the priority, the target cell from the at least one candidate cell for camping.

In some embodiments, the sixth determining submodule includes a first determining unit and a second determining unit. The first determining unit is configured to determine, by means of the RRC entity from the at least one candidate cell, one or more candidate cells each operating at a different frequency from the current serving cell as a first cell set. The second determining unit is configured to determine, by means of the RRC entity from the at least one candidate cell, one or more candidate cells each operating at a same frequency as the current serving cell as a second cell set. Here, a priority of each candidate cell in the first cell set is higher than a priority of each candidate cell in the second cell set.

In some embodiments, the apparatus 800 further includes a reestablishment module. The reestablishment module is configured to reestablish, by means of the RRC entity, an RRC connection to the target cell for transmitting the uplink data in the target cell.

It should be noted that the apparatus embodiments are described in a similar manner as the method embodiments and can provide similar advantageous effects as the method embodiments. For technical details not disclosed in the apparatus embodiments of the present disclosure, reference can be to the description of the method embodiments of the present disclosure.

Correspondingly, based on the same technical concept, according to an embodiment of the present disclosure, a terminal is provided. The terminal is configured to implement the wireless connection reestablishment method described in any of the above method embodiments. FIG. 9 is a schematic diagram showing a hardware entity for a terminal according to an embodiment of the present disclosure. As illustrated in FIG. 9, a hardware entity for a terminal 900 includes a processor 901, a receiver 902, a transmitter 903, a memory 904, and a bus 905. It should be noted that FIG. 9 is only an exemplary architecture diagram. The network architecture can include other functional units in addition to the functional units illustrated in FIG. 9, and the embodiment of the present disclosure is not limited in this regard.

The processor 901 includes one or more processing cores. The processor 801 executes various functional applications and information processing by running a software program and modules.

The receiver 902 and the transmitter 903 can be implemented as a communication component. The communication component may be a communication chip.

The memory 904 is connected to the processor 901 through the bus 905.

The memory 904 can be configured to store a computer program. The processor 901 is configured to execute the computer program to implement the steps of the wireless connection reestablishment method performed by the terminal according to any of the above method embodiments.

In addition, the memory 2104 may be implemented by any type of volatile or non-volatile storage device or a combination thereof. The volatile or non-volatile storage device includes, but is not limited to a magnetic disk or an optical disc, an Electrically Erasable Programmable Read-Only Memory (EEPROM), an Erasable Programmable Read-Only Memory (EPROM), a Static Random Access Memory (SRAM), a Read-Only Memory (ROM), a magnetic memory, a flash memory, and a Programmable Read-Only Memory (PROM).

In an exemplary embodiment, the terminal includes the processor 901 and the memory 904. The processor is configured to invoke the computer program stored in the memory 904 to perform the wireless connection reestablishment method according to any of the above method embodiments. The method includes: transmitting, in response to uplink data, a scheduling request to a network device; determining a transmission rate for transmitting the uplink data on a scheduled uplink resource; and triggering, in response to the transmission rate satisfying a trigger condition, an RRC connection reestablishment process.

In some embodiments, the memory 904 is further configured to cache, by means of an access stratum data plane entity, the uplink data transmitted by a non-access stratum data plane entity. The transmitter 903 is further configured to transmit, by means of the access stratum data plane entity, the scheduling request to the network device. The scheduling request is configured to request, from the network device, an uplink resource for carrying the uplink data. Correspondingly, the processor 901 is further configured to: determine, by means of the access stratum data plane entity, the transmission rate for transmitting the uplink data on the scheduled uplink resource; and trigger, by means of the access stratum data plane entity in response to the transmission rate satisfying the trigger condition, the RRC connection reestablishment process.

In some embodiments, the processor 901 is further configured to: determine, by means of the access stratum data plane entity, a number of data packets transmitted on the uplink resource within a specific time period, in which the specific time period begins at a time point at which the uplink data is received by the access stratum data plane entity; and determine, by means of the access stratum data plane entity based on the number of data packets and the specific time period, the transmission rate.

In some embodiments, the processor 901 is further configured to: determine, by means of the access stratum data plane entity based on a resource indication returned by the network device, the uplink resource scheduled within a specific time period, in which the specific time period begins at a time point at which the uplink data is received by the access stratum data plane entity; and determine, by means of the access stratum data plane entity based on the uplink resource scheduled within the specific time period, the transmission rate.

In some embodiments, the processor 901 is further configured to: determine, by means of the access stratum data plane entity, an amount of cached data within N consecutive specific time periods and the transmission rate within each of the N consecutive specific time periods, in which N is a positive integer greater than or equal to 2; and transmit, by means of the access stratum data plane entity in response to the amount of the cached data being greater than a specific cache threshold and the transmission rate within each of the N consecutive specific time periods being smaller than a specific transmission threshold, a connection reestablishment indication message to an RRC entity, the connection reestablishment indication message being used for triggering the RRC connection reestablishment process.

In some embodiments, the processor 901 is further configured to determine, by means of the RRC entity, a target cell for camping by means of cell selection in response to the connection reestablishment indication message.

In some embodiments, the processor 901 is further configured to: initiate, by means of the RRC entity in response to the connection reestablishment indication message, the cell selection to obtain at least one candidate cell, the at least one candidate cell being an intra-frequency cell or an inter-frequency cell other than a current serving cell; determine, by means of the RRC entity based on a frequency at which each of the at least one candidate cell operates, a priority corresponding to the candidate cell; and select, by means of the RRC entity based on the priority, the target cell from the at least one candidate cell for camping.

In some embodiments, the processor 901 is further configured to: determine, by means of the RRC entity from the at least one candidate cell, one or more candidate cells each operating at a different frequency from the current serving cell as a first cell set; and determine, by means of the RRC entity from the at least one candidate cell, one or more candidate cells each operating at a same frequency as the current serving cell as a second cell set. Here, a priority of each candidate cell in the first cell set is higher than a priority of each candidate cell in the second cell set.

In some embodiments, the processor 901 is further configured to reestablish, by means of the RRC entity, an RRC connection to the target cell for transmitting the uplink data in the target cell.

Correspondingly, according to an embodiment of the present disclosure, a computer-readable storage medium is provided. The computer-readable storage medium stores a computer program. The computer program, when executed by a processor, implements the steps of the wireless connection reestablishment method according to any of the above embodiments.

It should be noted that the embodiments of the storage medium and the device are described in a similar manner as the method embodiments, and can provide similar advantageous effects as the method embodiments. For technical details not disclosed in the embodiments of the storage medium and the device of the present disclosure, reference can be made to the description of the method embodiments of the present disclosure.

Correspondingly, according to an embodiment of the present disclosure, a chip is further provided. The chip includes a programmable logic circuit and/or program instructions. When running, the chip is configured to implement the wireless connection reestablishment method according to any of the above embodiments. Correspondingly, according to an embodiment of the present disclosure, a computer program product is further provided. The computer program product, when executed by the processor of the terminal, implement the wireless connection reestablishment method according to any of the above embodiments.

It should also be understood that references to "one embodiment" or "an embodiment" throughout the specification imply that specific features, structures, or characteristics related to the embodiments of the present disclosure are included in at least one embodiment of the present disclosure. Thus, expressions "in one embodiment" or "in an embodiment" throughout the specification do not necessarily refer to the same embodiment. In addition, these specific features, structures, or characteristics can be combined with one or more embodiments in any suitable manner. It should be understood that in the various embodiments of the present disclosure, numerical values of sequence numbers of the above processes do not mean an execution order and should not constitute any limitation to an implementation process of the embodiments of the present disclosure as the execution order of individual processes should be determined by their functions and internal logics. The above sequence numbers of the embodiments of the present disclosure are for description only, and do not represent superiority or inferiority of the embodiments.

It should be noted that in the present disclosure, terms "include", "have", and any variations thereof are intended to cover non-exclusive inclusions, such that a process, method, product, or device that includes a series of elements is not necessarily limited to those clearly listed elements, but may also include other elements that are not clearly listed or are inherent to the process, method, product, or device. Without further limitation, an element defined by the phrase "including a ..." does not preclude the presence of additional identical elements in the process, method, product, or device that includes the element.

In several embodiments provided by the present disclosure, it should be understood that the device and method disclosed can be implemented in other ways. The device embodiments described above are merely exemplary. For example, the units are merely divided based on logic functions. In practical implementation, the units can be divided in other manners. For example, multiple units or components can be combined or integrated into another system, or some features can be omitted or not executed. In addition, mutual coupling or direct coupling or communication connection of individual components described or discussed can be implemented as indirect coupling or communication connection via some interfaces, devices or units, and may be electrical, mechanical or in other forms.

The units illustrated as separate components may be or not be separated physically, and components shown as units may be or not be physical units, i.e., may be located at one position, or may be distributed onto multiple network units. It is possible to select some or all of the units according to actual needs, for achieving the objective of embodiments of the present disclosure.

In addition, the functional units in the embodiments of the present disclosure may be integrated into one processing unit, or alternatively be separate units, or two or more units may be integrated into one unit. The integrated unit may be implemented in the form of hardware, or in the form of a combination of hardware and a software functional unit. Alternatively, when the integrated unit is implemented in the form of the software functional unit and is sold or used as a standalone product, it can be stored in a computer-readable storage medium. Based on this understanding, all or part of the technical solutions according to the embodiments of the present disclosure, or the part thereof that contributes to the prior art, can be embodied in the form of a software product. The computer software product may be stored in a storage medium and contain instructions to enable an automatic test line of a device to perform all or part of the steps of the method described in each of the embodiments of the present disclosure. The storage medium may include various media capable of storing program codes, such as a mobile storage device, an ROM, a magnetic disk, or an optical disc.

The method disclosed in any of the method embodiments provided in the present disclosure can be combined arbitrarily without any conflict to obtain a new method embodiment. The features disclosed in the several method or device embodiments provided in the present disclosure can be combined arbitrarily without any conflict to obtain a new method embodiment or a new device embodiment.

While the specific embodiments of the present disclosure have been described above, the protection scope of the present disclosure is not limited to these embodiments. Various variants and alternatives can be easily conceived by any of those skilled in the art without departing from the technical scope of the present disclosure. Therefore, these variants and alternatives are to be encompassed by the protection scope of present disclosure as defined by the claims as attached.

### Industrial Applicability

In the embodiments of the present disclosure, when the terminal maintains the low uplink transmission rate for a long time, the RRC connection reestablishment process is triggered to obtain a good transmission service for the uplink user data by means of reestablishing the RRC connection on the new serving cell, thereby improving the user experience. Since the terminal having the low uplink transmission rate is connected to the new serving cell through the RRC reestablishment process, a congestion status of the current serving cell can be partially mitigated.

## Claims

1. A wireless connection reestablishment method, comprising:
transmitting, in response to uplink data, a scheduling request to a network device;
determining a transmission rate for transmitting the uplink data on a scheduled uplink resource; and
triggering, in response to the transmission rate satisfying a trigger condition, a Radio Resource Control (RRC) connection reestablishment process.

2. The method according to claim 1, further comprising:
caching, by an access stratum data plane entity, the uplink data transmitted by a non-access stratum data plane entity;
transmitting, by the access stratum data plane entity, the scheduling request to the network device;
determining, by the access stratum data plane entity, the transmission rate for transmitting the uplink data on the scheduled uplink resource; and
triggering, by the access stratum data plane entity in response to the transmission rate satisfying the trigger condition, the RRC connection reestablishment process.

3. The method according to claim 2, wherein said determining, by the access stratum data plane entity, the transmission rate for transmitting the uplink data on the scheduled uplink resource comprises:
determining, by the access stratum data plane entity, a number of data packets transmitted on the uplink resource within a specific time period, wherein the specific time period begins at a time point at which the uplink data is received by the access stratum data plane entity; and
determining, by the access stratum data plane entity based on the number of data packets and the specific time period, the transmission rate.

4. The method according to claim 2, wherein said determining, by the access stratum data plane entity, the transmission rate for transmitting the uplink data on the scheduled uplink resource comprises:
determining, by the access stratum data plane entity based on a resource indication returned by the network device, the uplink resource scheduled within a specific time period, wherein the specific time period begins at a time point at which the uplink data is received by the access stratum data plane entity; and
determining, by the access stratum data plane entity based on the uplink resource scheduled within the specific time period, the transmission rate.

5. The method according to any one of claims 2 to 4, wherein said triggering, by the access stratum data plane entity in response to the transmission rate satisfying the trigger condition, the RRC connection reestablishment process comprises:
determining, by the access stratum data plane entity, an amount of cached data within N consecutive specific time periods and the transmission rate within each of the N consecutive specific time periods, wherein N is a positive integer greater than or equal to 2; and
transmitting, by the access stratum data plane entity in response to the amount of the cached data being greater than a specific cache threshold and the transmission rate within each of the N consecutive specific time periods being smaller than a specific transmission threshold, a connection reestablishment indication message to an RRC entity, the connection reestablishment indication message being used for triggering the RRC connection reestablishment process.

6. The method according to claim 5, further comprising:
determining, by the RRC entity, a target cell for camping by means of cell selection in response to the connection reestablishment indication message.

7. The method according to claim 6, wherein said determining, by the RRC entity, the target cell for camping by means of cell selection in response to the connection reestablishment indication message comprises:
initiating, by the RRC entity in response to the connection reestablishment indication message, the cell selection to obtain at least one candidate cell, the at least one candidate cell being an intra-frequency cell or an inter-frequency cell other than a current serving cell;
determining, by the RRC entity based on a frequency at which each of the at least one candidate cell operates, a priority corresponding to the candidate cell; and
selecting, by the RRC entity based on the priority, the target cell from the at least one candidate cell for camping.

8. The method according to claim 7, wherein said determining, by the RRC entity based on the frequency at which each of the at least one candidate cell operates, the priority corresponding to the candidate cell comprises:
determining, by the RRC entity from the at least one candidate cell, one or more candidate cells each operating at a different frequency from the current serving cell as a first cell set; and
determining, by the RRC entity from the at least one candidate cell, one or more candidate cells each operating at a same frequency as the current serving cell as a second cell set, wherein a priority of each candidate cell in the first cell set is higher than a priority of each candidate cell in the second cell set.

9. The method according to claim 6, further comprising:
reestablishing, by the RRC entity, an RRC connection to the target cell for transmitting the uplink data in the target cell.

10. A wireless connection reestablishment apparatus, comprising:
a transmitting module configured to transmit, in response to uplink data, a scheduling request to a network device;
a determining module configured to determine a transmission rate for transmitting the uplink data on a scheduled uplink resource; and
a trigger module configured to trigger, in response to the transmission rate satisfying a trigger condition, a Radio Resource Control (RRC) connection reestablishment process.

11. The apparatus according to claim 10, further comprising:
a cache module configured to cache, by an access stratum data plane entity, the uplink data transmitted by a non-access stratum data plane entity, wherein
the transmitting module is further configured to transmit, by the access stratum data plane entity, the scheduling request to the network device, the scheduling request being configured to request, from the network device, an uplink resource for carrying the uplink data;
the determining module is further configured to determine, by the access stratum data plane entity, the transmission rate for transmitting the uplink data on the scheduled uplink resource; and
the trigger module is further configured to trigger, by the access stratum data plane entity in response to the transmission rate satisfying the trigger condition, the RRC connection reestablishment process.

12. The apparatus according to claim 11, wherein the determining module comprises:
a first determining submodule configured to determine, by the access stratum data plane entity, a number of data packets transmitted on the uplink resource within a specific time period, wherein the specific time period begins at a time point at which the uplink data is received by the access stratum data plane entity; and
a second determining submodule configured to determine, by the access stratum data plane entity based on the number of data packets and the specific time period, the transmission rate.

13. The apparatus according to claim 11, wherein the determining module comprises:
a third determining submodule configured to determine, by the access stratum data plane entity based on a resource indication returned by the network device, the uplink resource scheduled within a specific time period, wherein the specific time period begins at a time point at which the uplink data is received by the access stratum data plane entity; and
a fourth determining submodule configured to determine, by the access stratum data plane entity based on the uplink resource scheduled within the specific time period, the transmission rate.

14. The apparatus according to any one of claims 11 to 13, wherein the trigger module comprises:
a fifth determining submodule configured to determine, by the access stratum data plane entity, an amount of cached data within N consecutive specific time periods and the transmission rate within each of the N consecutive specific time periods, wherein N is a positive integer greater than or equal to 2; and
a trigger submodule configured to transmit, by the access stratum data plane entity in response to the amount of the cached data being greater than a specific cache threshold and the transmission rate within each of the N consecutive specific time periods being smaller than a specific transmission threshold, a connection reestablishment indication message to an RRC entity, the connection reestablishment indication message being used for triggering the RRC connection reestablishment process.

15. The apparatus according to claim 14, further comprising:
a cell selection module configured to determine, by the RRC entity, a target cell for camping by means of cell selection in response to the connection reestablishment indication message.

16. The apparatus according to claim 15, wherein the cell selection module comprises:
a cell selection submodule configured to initiate, by the RRC entity in response to the connection reestablishment indication message, the cell selection to obtain at least one candidate cell, the at least one candidate cell being an intra-frequency cell or an inter-frequency cell other than a current serving cell;
a sixth determining submodule configured to determine, by the RRC entity based on a frequency at which each of the at least one candidate cell operates, a priority corresponding to the candidate cell; and
a camping submodule configured to select, by the RRC entity based on the priority, the target cell from the at least one candidate cell for camping.

17. The apparatus according to claim 16, wherein the sixth determining submodule comprises:
a first determining unit configured to determine, by the RRC entity from the at least one candidate cell, one or more candidate cells each operating at a different frequency from the current serving cell as a first cell set; and
a second determining unit configured to determine, by the RRC entity from the at least one candidate cell, one or more candidate cells each operating at a same frequency as the current serving cell as a second cell set, wherein a priority of each candidate cell in the first cell set is higher than a priority of each candidate cell in the second cell set.

18. The apparatus according to claim 15, further comprising:
a reestablishment module configured to reestablish, by the RRC entity, an RRC connection to the target cell for transmitting the uplink data in the target cell.

19. A terminal, comprising:
a processor; and
a memory storing a computer program executable on the processor,
wherein the processor, when executing the computer program, implements the steps of the method according to any one of claims 1 to 9.

20. A computer-readable storage medium, having a computer program stored thereon, wherein the computer program, when executed by a processor, implements the steps of the method according to any one of claims 1 to 9.
